(19) Europäisches Patentamt / European Patent Office / Office européen des brevets

(11) **EP 2 272 174 B1**

(12) **EUROPEAN PATENT SPECIFICATION**

(45) Date of publication and mention
of the grant of the patent:
**30.05.2012 Bulletin 2012/22**

(51) Int Cl.:
*H04B 1/7075* (2011.01)      *H04B 1/708* (2011.01)
*H04B 1/709* (2011.01)      *G06F 17/15* (2006.01)

(21) Application number: **08751488.1**

(22) Date of filing: **29.02.2008**

(86) International application number:
**PCT/IT2008/000138**

(87) International publication number:
**WO 2009/107155 (03.09.2009 Gazette 2009/36)**

(54) **APPARATUS AND METHOD FOR THE ACQUISITION OF A SPREADING SEQUENCE IN APERIODIC DSSS SYSTEMS**

VORRICHTUNG UND VERFAHREN ZUR BESCHAFFUNG EINER SPREIZSEQUENZ IN APERIODISCHEN DSSS-SYSTEMEN

APPAREIL ET PROCÉDÉ POUR L ACQUISITION D UNE SÉQUENCE D ÉTALEMENT DANS DES SYSTÈMES DSSS APÉRIODIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.01.2011 Bulletin 2011/02**

(73) Proprietor: **SELEX ELSAG S.P.A.**
**16154 Genova (IT)**

(72) Inventor: **TEDESCHI, Raffaele**
**I-95045 Misterbianco (IT)**

(74) Representative: **Cerbaro, Elena et al**
**Studio Torta S.p.A.**
**Via Viotti, 9**
**10121 Torino (IT)**

(56) References cited:
**EP-A- 1 067 702      WO-A-99/41846**

**Description**

**FIELD OF THE INVENTION**

The present invention relates to an apparatus and a method for the acquisition of a spreading sequence in aperiodic DSSS systems, and more particularly to an apparatus and a method for acquiring a pseudo noise (PN) sequence in telecommunication systems employing an aperiodic direct sequence spread spectrum (DSSS) modulation.

**BACKGROUND OF THE INVENTION**

As known, in a spread spectrum communication system, a transmitter spreads an information signal over a wide bandwidth and a receiver, upon reception of the information signal, despreads the information signal into the original bandwidth.

One possible technique to spread the bandwidth of a signal is called direct sequence spread spectrum (DSSS).

In a system employing a DSSS technique, before transmission, a narrow-band information signal is multiplied by a spreading code so as to spread its energy over a broader band, thus generating a broad-band information signal. After reception, the broad-band information signal is multiplied again by the same spreading code used in transmission, thus recovering the original narrow-band information signal.

DSSS communication systems allow an increase of the immunity of the useful signal against narrow-band interfering signals; when the received signal is multiplied by the spreading code, the interfering signal energy is spread on a band which is wider than the useful signal band. Then a narrow-band filter passes the useful signal and rejects most of the interfering signal.

Usually, pseudo-random noise (PN) sequences are used as spreading codes. The period of a bit of the PN sequence is usually called chip time or chip period ($T_c$), and the period of a bit of the non-spreaded information signal is usually called bit time or bit period ($T_B$). Accordingly, the bits of the PN sequence are called chips, as well as the bits of the broad-band information signal, that are also called chips, to distinguish them from the bits of the non-spreaded information signal.

Moreover, the chip time ($T_c$) is lower than the bit time ($T_B$) and their ratio $T_B/T_c$ is called spreading factor N; the value of N also represents the length in chips of one bit of the non-spreaded information signal.

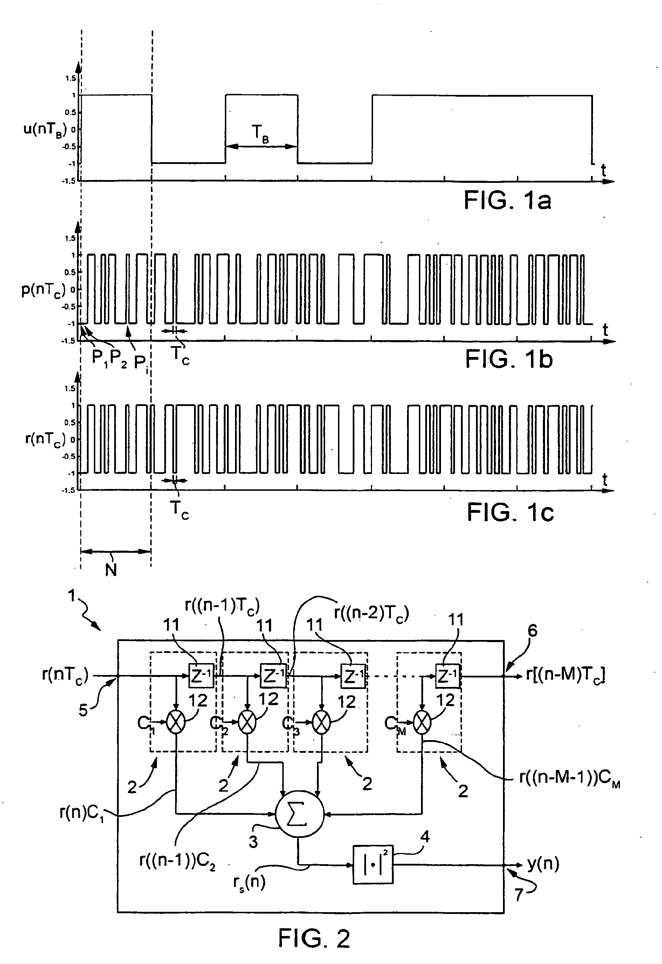

For a better comprehension of the waveforms used in DSSS communication systems, reference is made to Figures 1a-1c. In detail, Figure la shows a non-spreaded signal $u(nT_B)$, that is an information signal to be transmitted; Figure 1b shows a PN sequence $p(nT_c)$, used to spread the non-spreaded signal and formed by a plurality of chips $p_i$; and Figure lc shows a spread spectrum signal $r(nT_c)= u(nT_B) \cdot p(nT_c)$, resulting from the spreading. As visible, the PN sequence $p(nT_c)$ has a period $N_c$ that is independent from the non-spreaded signal $u(nT_B)$. In this particular case, the spreading factor is N=20.

Two typologies of DSSS systems exist: periodic DSSS systems, in which the bit time is equal to or multiple of the entire PN sequence time extension, and aperiodic DSSS systems, in which there is no relation between the bit time and the PN sequence time extension. Aperiodic DSSS systems are commonly used along with concatenated codes.

For the system to work effectively, the receiver must be able to perform a synchronized acquisition, i.e. it must be able to generate a local replica of the PN sequence used in transmission and then to synchronize the phase of the local replica with the phase of the PN sequence contained in the received signal.

The acquisition of the synchronization in a DSSS system is usually divided into two operations, usually called acquisition and tracking operation. During the acquisition operation, the received information signal and the local replica of the PN sequence are coarsely aligned within a predetermined acceptable error (for example 1/2 of a chip time). During the tracking operation, a finer alignment between the received information signal and the local replica of the PN sequence is performed and is maintained over time.

When considering the acquisition operation, three main techniques exist: serial search, sequential search and matched filter technique. In a system employing the matched filter technique, the received information signal is sequentially fed to a correlator whose coefficients are an exact replica of the PN sequence (i.e., a matched filter). The matched filter generates an output signal that is maximum when the PN sequence contained in the received signal is aligned (in phase) with the correlator coefficients. This technique allows to detect the phase of the PN sequence contained in the received information signal and then to align the local replica, in order to despread the received information signal and to recover the original narrow-band information signal.

In particular, the matched filter technique offers the best performances in terms of acquisition speed under low signal-to-noise (SN) ratio conditions and is less affected by problems of missed and/or false acquisition. However, the most limiting feature of the matched filter technique is the large amount of computational resources required for its implementation and the fact that it cannot be used in aperiodic DSSS systems.

Today the interest toward this technique is considerably increasing, mostly because of advances in computational resources, as obtainable from programmable logic devices or field programmable gate arrays (FPGA), and cost reduction of the same.

WO 99/41846 is an example of a DSSS detector for detecting a synchronisation between a spread spectrum signal spreading sequence. The detector comprises at least one branch comprising a plurality of correlators cascade connected to each other and separated from one another by a branch delay block. Each correlator correlates chips of the spreading sequence with chips of the spread spectrum signal and generates its own correlation value. Matching detection means receive the correlation values and detect when chips of the spreading sequence are aligned with the chips of the spread spectrum signal.

As known, in an aperiodic DSSS system, the PN sequence undergoes a sign modulation due to the information signal being transmitted. By considering that the information signal is a digital word of 1 and 0, and supposing that 1 is transmitted with a positive sign and 0 is transmitted with a negative sign, a portion of the PN sequence may be modulated and transmitted with a positive sign, while another portion may be modulated and transmitted with a negative sign.

The PN sequence is thus subjected to an unpredictable sign modulation due to the bits of the information signal, since there is no relation between the PN sequence duration and the duration of each bit of the information signal. At the receiver, it is therefore unknown at which point of the PN sequence there may be a sign change.

The matched filter technique is not applicable with aperiodic DSSS systems because, even when the PN sequence is perfectly aligned with the information signal, the output of the correlator may not be maximum. In fact, the positively modulated part of the PN sequence contained in the received information signal correlates with the matched filter coefficients generating an output with a positive sign, while the negatively modulated part of the PN sequence generates an output with a negative sign. It is thus impossible, on the sole basis of the matched filter output, to discriminate between PN sequences which correlates with the filter coefficients and those PN sequences which do not correlate with them.

### OBJECT AND SUMMARY OF THE INVENTION

The aim of the present invention is to overcome the limitations of the matched filter technique according to the prior art by proposing a system and a method that applies the matched filter technique to aperiodic DSSS systems.

According to the invention, an apparatus and a method for the acquisition of a spreading sequence in aperiodic DSSS systems are provided, as defined respectively in claims 1 and 13.

### DESCRIPTION OF THE FIGURES

For a better understanding of the present invention, preferred embodiments, which are intended purely by way of example and are not to be construed as limiting, will now be described with reference to the attached drawings (all not to scale), wherein:

- Figures 1a-1c show examples of a non-spreaded signal, a spreading sequence and a spread spectrum signal;
- Figure 2 shows a schematic representation of a partial adapted correlator;
- Figure 3 shows a schematic representation of a portion of the partial adapted correlator of Figure 2;
- Figure 4 shows a schematic representation of a detector comprising a plurality of partial adapted correlators according to a first embodiment of the present invention;
- Figure 5 shows the detector of Figure 4 and the calculation results generated by its components during use, in case of a simple, exemplary PN sequence, in a time instant;
- Figures 6a-6c are graphic, normalized representations of calculation results versus time obtained with the detector of Figure 4;
- Figure 7 shows a schematic representation of a detector comprising a plurality of partial adapted correlators according to another embodiment of the present invention; and
- Figure 8 shows a transmission system incorporating the present detector.

### DETAILED DESCRIPTION OF THE INVENTION

Figure 2 shows a correlator 1, whose coefficients are obtained from only a part of the spreading sequence, comprising a number M of stages 2 cascaded connected to one another, an adder 3 and a square module block 4.

In detail, the correlator 1 has a correlator input port 5 to receive a spread spectrum signal $r(nT_c)$, formed by a plurality of signal samples (or chips) $r(n)$, and a first and a second correlator output ports 6, 7, being respectively the output of the cascade of stages 2 and the output of the square module block 4.

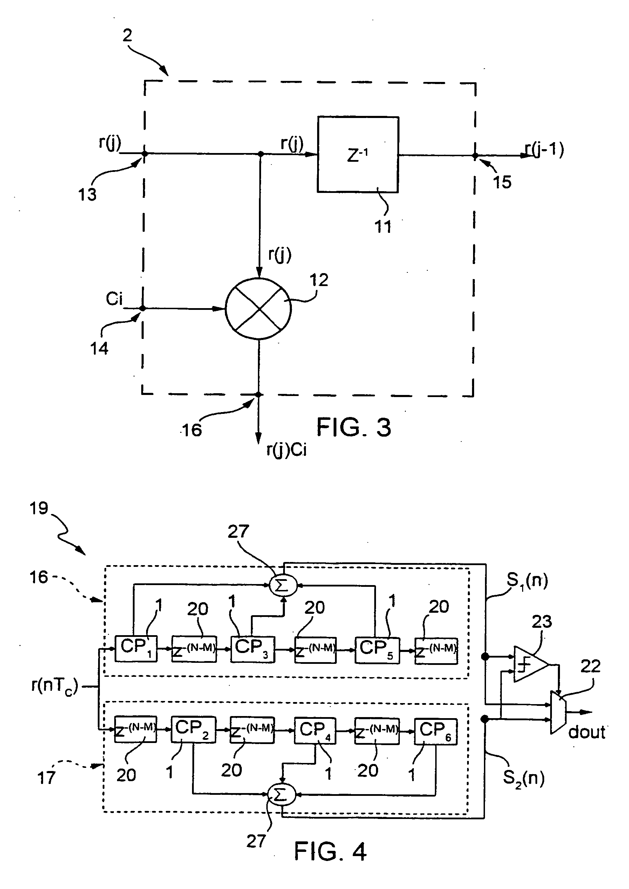

In detail, Figure 3, each stage 2 comprises a delay element 11; a multiplier 12; a first input 13 receiving, at each time instant, a signal sample (i.e., a chip of the spread spectrum signal) $r(j)$, connected to the delay element 11 and to the multiplier 12; a second input 14, receiving an own coefficient $c_i$, connected to the multiplier 12; a first output 15, connected to the delay element 11; and a second output 16, connected to the multiplier 12. Thus, each signal sample r(j) is fed both to the multiplier 12 and to the delay element 11.

The multiplier 12 multiplies the signal sample r(j) by the coefficient $c_i$, thus producing on the second output 16 a sample product $r(j) \cdot c_i$; the delay element 11 introduces a delay equal to one chip time to the signal sample r(j), thus producing on the first output 15 a retarded signal sample r(j-1).

With reference to Figure 2, a spread spectrum signal $r(nT_c)$ is inputted to the left-hand stage 2 of the correlator 1 through the correlator input 5, where the spread spectrum signal $r(nT_c)$ is processed as described with reference to Figure 3. The output 15 of the left-hand stage 2 is then inputted to the next stages 2 and undergoes the same processes as described with reference to Figure 3, generating an M-chip retarded information signal $r((n-M)T_c)$ on the output 6 of the correlator 1. In addition, each stage 2 generates a respective sample product $r(n-i-1) \cdot c_i$, with i ranging from 1 to M.

The sample products $r(n) \cdot c_i$, $r(n-1) \cdot c2$, ..., $r(n-M-1) \cdot c_M$ are inputted to the adder 3, which generates a sum signal $r_s(n)$ which is processed by the square module block 4, that calculates the module and square power, and generates a correlator output signal y(n) on the second correlator output port 7:

$$y(n) = |r(n) \cdot c_1 + r(n-1) \cdot c_2 + \ldots + r(n-M-1) \cdot c_M|^2$$

The number M of stages 2 for each correlator 1 is chosen according to the following formula (1):

$$M = (k/m) \cdot N \qquad (1)$$

where k and m are positive numbers and N is the spreading factor or, equivalently, the length, in chips, of one information bit of the original narrow-band information signal, as shown in Figure 1c. k and m are selected at the design stage as a tradeoff between complexity and noise robustness, so that (k/m)<1, as discussed in more detail hereinafter. It follows that M<N.

Using the correlator 1 of Figure 2 it is possible to form a detector including one or more branches, each formed by the cascade-connection of a plurality of partial adapted correlators 1. In this case, m in formula (1) represents the number of branches and k is related to the length of each correlator 1, as clear from the following examples. Even if the detector can work with one branch only, a higher number of branches (equal to m) enhances its performance in terms of noise robustness and spreading sequence acquisition velocity, but increases the complexity of the system and the computational costs. Therefore, the optimum number of branches should be chosen case by case according to the available hardware resources and design constraints.

Figure 4 shows an embodiment of a detector 19 formed by two parallel branches 16, 17 (that is, m=2); furthermore, since the ratio k/m of formula (1) must be lower than one, it follows that the only acceptable value for k is one. Therefore, according to formula (1), M=(1/2)N, and each correlator 1 has a number M of stages 2 equal to one half the information bit length (calculated in number of chips).

The number of partial adapted correlators 1 belonging to each branch 16, 17 is variable, for example it can be equal to three, giving a total number of partial adapted correlators 1 of six. For clarity, in Figure 4, the partial adapted correlators 1 of the first branch 16 are identified by CP1, CP3, CP5, while the partial adapted correlators 1 of the second branch 17 are identified by CP2, CP4, CP6.

The coefficients $c_i$ of CP1-CP6 are taken from the PN sequence (or, if necessary, from more consecutive PN sequences).

Each correlator 1, having M stages 2, needs a sequence of M coefficients $c_i$. Lets suppose the PN sequence be the following:

$$p_1 \; p_2 \; \ldots \; p_M \; p_{M+1} \; p_{M+2} \; \ldots \; p_{2M} \; p_{2M+1} \; p_{2M+2} \; \ldots \; p_{3M} \; p_{3M+1} \; p_{3M+2} \; \ldots \; p_{4M}$$

$$p_{4M+1} \; p_{4M+2} \; \ldots \; p_{5M} \; p_{5M+1} \; p_{5M+2} \; \ldots \; p_{6M} .$$

In the first branch 16, the coefficients $c_i$ of CP1 are chosen as the first M chips $p_i$ of the PN sequence, i.e.:

$$p_i \Big|_{i=1}^{M} \; ;$$

the coefficients $c_i$ of CP3 are chosen as the M chips $p_i$ starting from the $(N+1)^{th}$ chip of the PN sequence, i.e.:

$$p_i\Big|_{i=1+N}^{M+N} = p_i\Big|_{i=2M+1}^{3M} ;$$

the coefficients $c_i$ of CP5 are chosen as the M chips $p_i$ starting from the $(2N+1)^{th}$ chip of the PN sequence, i.e.:

$$p_i\Big|_{i=1+2N}^{M+2N} = p_i\Big|_{i=4M+1}^{5M} .$$

Analogously, in the second branch 17 (i.e. CP2, CP4, CP6), the coefficients $c_i$ are taken from the chips of the PN sequence in groups of M, starting from the $(N-M+1)^{th}$ chip. In detail, the coefficients $c_i$ of CP2 correspond to:

$$p_i\Big|_{i=M+1}^{2M} ;$$

the coefficients $c_i$ of CP4 correspond to:

$$p_i\Big|_{i=3M+1}^{4M} ;$$

the coefficients $c_i$ of CP6 correspond to:

$$p_i\Big|_{i=5M+1}^{6M} ;$$

Thus, according to the embodiment of Figure 4, the coefficients of CP1 are:

$$(c_1 \quad c_2 \quad \dots \quad c_M) = (p_1 \quad p_2 \quad \dots \quad p_M) ;$$

the coefficients of CP2 are:

$$(c_{M+1} \quad c_{M+2} \quad \dots \quad c_{2M}) = (p_{M+1} \quad p_{M+2} \quad \dots \quad p_{2M}) ;$$

the coefficients of CP3 are:

$$(c_{2M+1} \quad c_{2M+2} \quad \dots \quad c_{3M}) = (p_{2M+1} \quad p_{2M+2} \quad \dots \quad p_{3M}) ;$$

the coefficients of CP4 are:

$$(c_{3M+1} \quad c_{3M+2} \quad \dots \quad c_{4M}) = (p_{3M+1} \quad p_{3M+2} \quad \dots \quad p_{4M}) ;$$

the coefficients of CP5 are:

$$(c_{4M+1} \quad c_{4M+2} \quad \dots \quad c_{5M}) = (p_{4M+1} \quad p_{4M+2} \quad \dots \quad p_{5M}) ;$$

the coefficients of CP6 are:

$$(c_{5M+1} \quad c_{5M+2} \quad \dots \quad c_{6M}) = (p_{5M+1} \quad p_{5M+2} \quad \dots \quad p_{6M}).$$

For each branch 16, 17, the partial adapted correlators 1 are separated by and connected to a delay block 20 that introduces a delay of (N-M) chips. The correlator 1 and the delay block 20 are thus cascade connected one another.

One of the branches (e.g., the first branch 16) receives the non-retarded spread spectrum signal $r(nT_c)$, while the other branch (the second branch 17) receives in input a (N-M)-retarded copy of the information signal $r(nT_c)$, that is $r((n-(N-M))T_c)$.

Therefore, when the chips $p_i$ of the PN sequence contained in the received signal are aligned with the coefficients $c_i$ of the partial adapted correlators 1, there is at least one of the branches of the detector 19 in which all the partial adapted correlators 1 receive a respective input signal (that is a portion of the spread spectrum signal $r(nT_c)$ and its retarded copies) which is aligned, with the same sign, with the respective coefficients $c_i$. Because of the sign modulation due to the chips of the received signal, the correlation sign may differ from one correlator 1 to another, but this is irrelevant, since the sign dependence is removed by the square module block 4 belonging to each correlator 1.

The correlator output signals y(n) of the partial adapted correlators 1 belonging to the first branch 16 are added together by an adding circuit 27, so as to reduce the negative effect of the noise, obtaining a detector sum signal s1(n). To this end, the higher the number of partial adapted correlators 1 in a branch, the more effective the noise rejection. However, the computational cost may increase significantly.

Analogously, also the output signals y(n) of the partial adapted correlators 1 belonging to the second branch 17 are added together, obtaining a second sum signal s2(n).

The first and the second sum signals s1(n) and s2(n) are then inputted to a multiplexer 22 and to a comparator 23. The comparator 23 detects the higher of the first and the second sum signals s1(n) and s2(n) and drives accordingly the multiplexer 22 so that the detector output $d_{out}$ is the higher of the first and the second sum signals s1(n) and s2(n).

Since during the synchronization acquisition, a detector output $d_{out}$ is produced at each time instant, an adequate threshold comparator and/or a filter should be implemented so as to discriminate between spurious outputs and maximum outputs, the latter being generated as a consequence of the alignments between the coefficients $c_i$ of the correlators 1 of one of the branches and the signal samples r(n) inputted in each respective correlator 1.

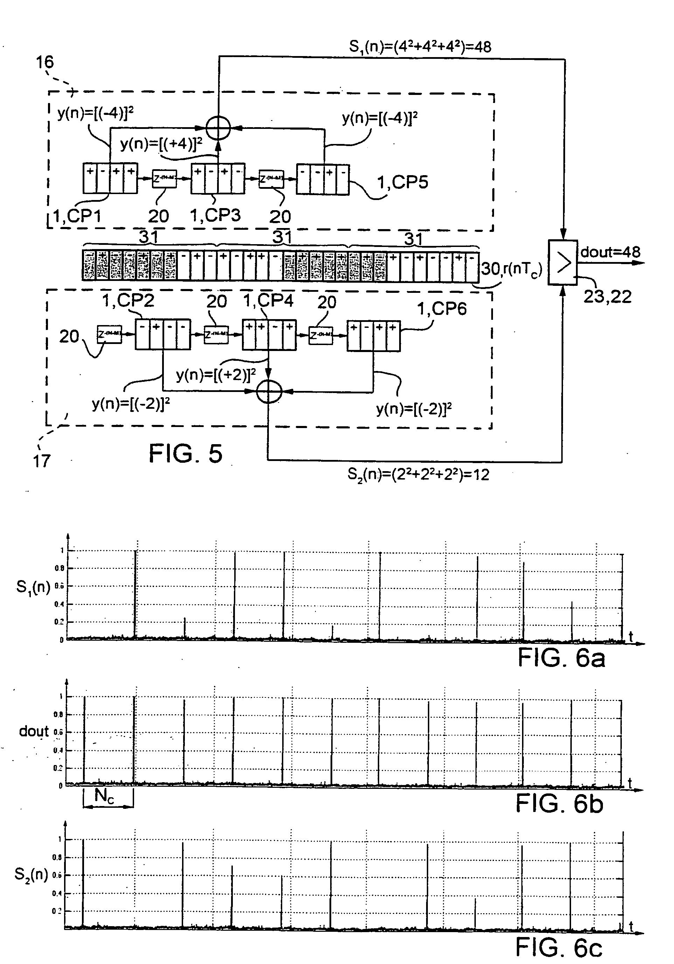

Figure 5 shows, schematically, the operation of the detector 19 of Figure 4 at an exemplary instant. In this example, the period $N_c$ of the PN sequence is chosen equal to ten (i.e., a PN sequence is formed by ten chips), the length N, in number of chips of a bit of the non-spreaded signal, has been supposed equal to eight, and consequently M is four.

For clarity, the received spread spectrum signal $r(nT_c)$ is graphically shown as a vector 30 of values +1 and -1, respectively representing the digital values 1 and 0 (in Figure 5, the value +1 is represented with the sign +, while the value -1 with the sign -). Analogously, the sequence of coefficients $c_i$ of each correlator 1 is graphically represented inside each correlator 1 as a sequence of values +1 and -1, representing the digital values 1 and 0 (also in this case, in Figure 5, the value +1 is represented as +, while the value -1 as -). Moreover, each signal sample r(n) is shown graphically aligned with the respective coefficient $c_i$ by which the same signal sample is multiplied in the considered instant.

In Figure 5, the PN sequence is a 10-chips vector:
(+1-1+1+1-1+1-1+1+1-1).

The four coefficients $c_i$ for each correlator 1 are taken, as already explained, from more consecutive PN sequences.

The signal samples of the received spread spectrum signal $r(nT_c)$ that are, during transmission, positively modulated are represented in locations of the vector 30 having a blank background, while the signal samples that are negatively modulated (i.e., underwent a sign variation) are represented in locations of the vector 30 having a gray background. For clarity, the PN sequence contained in the received spread spectrum signal is, in Figure 5, indicated as a PN vector 31, formed by ten consecutive signal samples, positively or negatively modulated as already described.

As clearly visible, the correlator outputs y(n) of correlators CP1, CP3, CP5 are maximum (equal to the square module of $\pm 4$), indicating a complete match between coefficients $c_i$ and aligned signal samples. In this case, the alignment is verified even for those signal samples r(n) negatively modulated (such as in correlators CP1 and CP5), because the square module operation (see the square module block 4, Figure 2) removes the sign dependence.

On the contrary, the correlator output signals y(n) of correlators CP2, CP4, CP6 are not maximum, because a sign variation occurs across those signal samples r(n) aligned with the coefficients $c_i$ of CP2, CP4 and CP6.

Here, the detector output $d_{out}$, which is the maximum among the first and second sum signals s1(n) and s2(n) of the two branches 16, 17, is thus the sum of all correlator output signals y(n) of the first branch 16.

Figure 6a-6c shows an exemplary waveform of the detector output $d_{out}$ confronted with the first and the second outputs s1(n), s2(n) of the first and second branches 16, 17, in subsequent time instants. For clarity, the maximum value reached by the waveform s1(n), s2 (n) and $d_{out}$ is normalized to 1.

The detector output $d_{out}$, Figure 6b, presents a series of correlation peaks, each indicating the occurrence of a match between the received signal samples r(n) and the coefficients $c_i$ of all the partial adapted correlators 1 of at least one of the branches of the detector 19. The correlation peaks in the waveform of the detector output $d_{out}$ are periodic, in particular the period of the correlation peaks is the period $N_c$ of the PN sequence.

It is clear that numerous modifications and variants can be made to the embodiment described, all falling within the scope of the invention, as defined in the appended claims.

In particular, the detector 19 may have more than two branches, or one branch only, and each correlator 1 in each branch may have a number M of stages 2 other than M=(1/2)N.

For example, in the case of a single branch, the formula (1) is reduced to M<N.

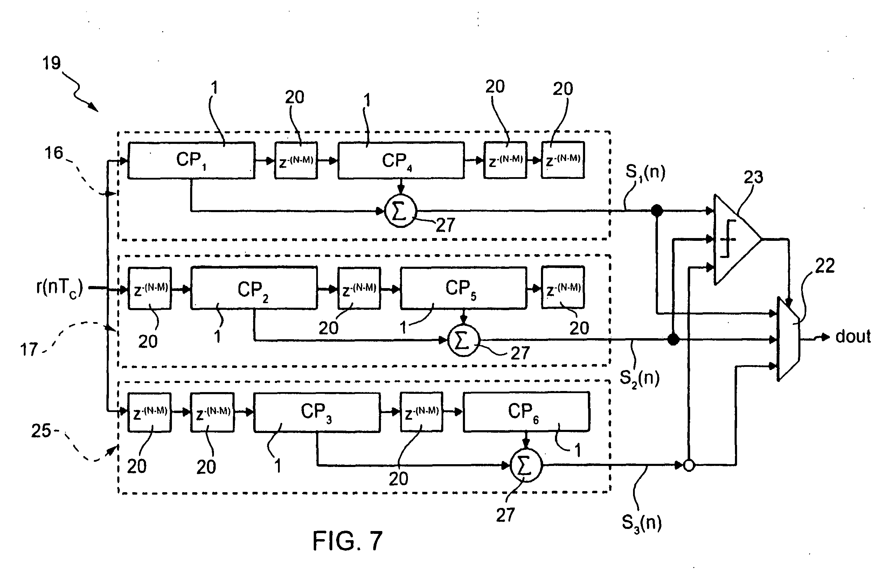

In another example, by choosing k=2 and m=3, the detector 19 has three branches and, according to the formula (1), M=(2/3)N. Moreover, the number of partial adapted correlators 1 in each branch may be whichever.-For example, Figure 7 shows an embodiment wherein the detector 19 has three branches 16, 17 and 25. Each branch 16, 17, 25 comprises two partial adapted correlators 1, for a total number of six partial adapted correlators 1. The partial adapted correlators 1 of the first branch 16 are CP1 and CP4, those of the second branch 17 are CP2 and CP5, those of the third branch 25 are CP3 and CP6.

The criteria for choosing the coefficients $c_i$ of each partial adapted correlators 1 is the same already described with reference to the embodiment of Figure 4.

In particular, starting from the first branch 16, the coefficients $c_i$ of CP1, are chosen as the first consecutive M chips $p_i$ of the PN sequence; the coefficients $c_i$ of CP2 of the second branch 17 are the M consecutive chips $p_i$ of the PN sequence starting from the $(N-M+1)^{th}$ chip $p_i$ of the PN sequence; the coefficients $c_i$ of CP3 of the third branch 25 are the M consecutive chips $p_i$ of the PN sequence starting from the $(2(N-M)+1)^{th}$ element of the PN sequence; the first coefficient cl of the second correlator 1 in each branch (CP4 for the first branch 16, CP5 for the second branch 17, CP6 for the third branch 25) is spaced N chips $p_i$ with respect to the first coefficient of the preceding correlator 1 in the same branch.

Analogously, in case of more than two partial adapted correlators 1, the third and subsequent partial adapted correlators 1 receive coefficients $c_i$ that are N chips spaced with respect to the first coefficient of the correlator 1 immediately preceding on the same branch.

The second branch 17 receives a delayed copy of the spread spectrum signal r(nTc) by virtue of the presence of one delay block 20 ahead of the partial adapted correlator CP2; the third branch 25 has two initial delay blocks 20 before the partial adapted correlator CP3, for delaying the spread spectrum signal r(nTc) by 2(N-M) chips of the spread spectrum signal r(nTc).

Generally, in case of m branches, the m-the branch receives a (m-1)(N-M) retarded copy of the original spread spectrum signal.

Furthermore, the detection of the matching may vary with respect to the shown solution. For example, the outputs of the correlators 1 of the single branch or of each branch may be compared to a threshold and the matching is detected when all the outputs of the single branch or of one branch exceed the threshold.

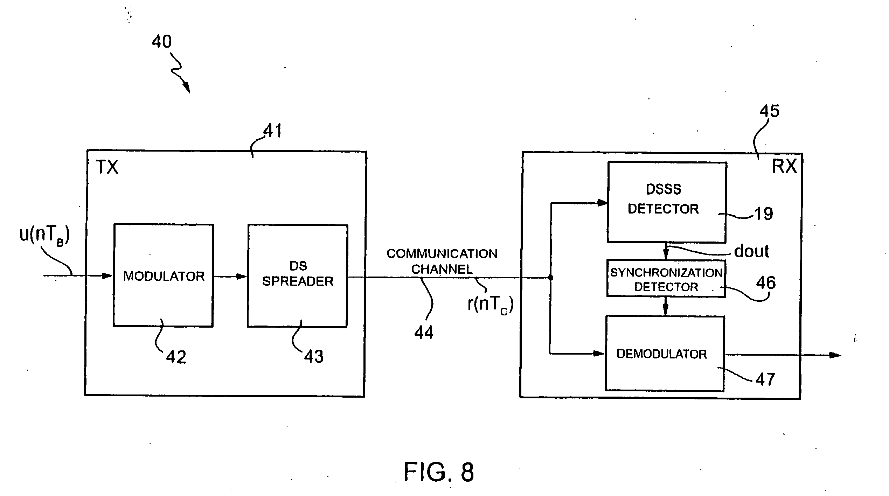

The invention finds a preferred application in DSSS modem receivers for spread spectrum telecommunication systems, as shown schematically in Figure 8. Here, system 40 comprises a transmitter 41, including a modulator 42 and a direct sequence (DS) spreader 43 to generate the spread spectrum signal $r(nT_c)$ to be transmitted; a communication channel 44, on which the spread spectrum signal is transmitted; and a receiver 45, for example a DSSS modem, receiving the spread spectrum signal and comprising the detector 19 of Figure 4 or Figure 7, a synchronization detector 46 and a demodulator 47. In this case, the synchronization detector 46 receives the detector output $d_{out}$, determines the synchronization on the basis of the detector output $d_{out}$ and controls the demodulator 47 so that the latter can perform a synchronized acquisition of the spread spectrum signal.

**Claims**

1. A DSSS detector (19) for detecting a synchronization between a spread spectrum signal ($r(nT_c)$), having a plurality of chips, r(n), and a spreading factor value, N, and a spreading sequence, PN, having a plurality of chips, $p_i$, the DSSS detector (19) comprising at least one branch (16) adapted to receive the spread spectrum signal, the at least one branch comprising a plurality of correlators (1), each correlator including a number, M, of correlation stages (2) which is lower than said spreading factor value, N, the correlators (1) being cascade connected to each other and separated from one another by a branch delay block (20), said branch delay block (20) being adapted to delay the received spread spectrum signal by a delay quantity, N-M, which is lower than the spreading factor value, N, each correlator (1) comprising correlating means (3, 4, 12) for correlating chips of the spreading sequence with chips of the spread spectrum signal and generating each an own correlation value (y(n)),
the DSSS detector (19) further comprising matching detection means (27, 22, 23) for receiving said correlation values and detecting when said chips of the spreading sequence are aligned with said chips of the spread spectrum signal.

2. A DSSS detector according to claim 1, wherein said matching detection means (27, 22, 23) comprise a branch adder element (27) adapted to receive said correlation values and generate a branch sum signal (s1(n)); and a maximum detector (23) adapted to detect a maximum of said branch sum signal.

3. A DSSS detector according to claim 1 or 2, wherein each correlation stage (2) has a stage input (13) configured to receive a chip, r(n), r(n-1), ..., r(n-M-1), of the spread spectrum signal ($r(nT_c)$), a correlator delay element (11) connected to said stage input, a chip correlation element (12) connected to said stage input and configured to correlate a chip of the spread spectrum signal with an own coefficient, $c_1$, $c_2$, ..., $c_M$, a first data output (16) connected to said chip correlation element (12) and outputting a correlated chip, $r(n) \cdot c_1$, $r(n-1) \cdot c_2$, ..., $r(n-M-1) \cdot c_M$, and a second data output (15) connected to said correlator delay element (11) and to a subsequent correlation stage (2); the correlator (1) further comprising a sum element (3) adapted to receive said correlated chips and calculate a correlation sum ($r_s(n)$) and a module element (4) adapted to receive said correlation sum and calculate the correlation value (y(n)).

4. A DSSS detector according to claim 3, wherein the correlation elements are multipliers (12).

5. A DSSS detector according to claim 3 or 4, wherein said coefficients ($c_1$, $c_2$, ..., $c_M$) of said correlation stages (2) are selected from the chips ($p_i$) of said spreading sequence, PN, and wherein the coefficients, $c_1$, $c_2$, ..., $c_M$, of a first correlator (1) of said plurality of correlators (1) are equal to the first M chips, $p_1$, $p_2$, ... $p_M$, of said spreading sequence, PN, and the coefficients of subsequent correlators (1) are equal to M subsequent chips of said spreading sequence, separated by N chips with respect to corresponding coefficients of an immediately preceding correlator (1), M being the number of correlation stages (2) in each correlator (1), and N being the spreading factor value.

6. A DSSS detector according to claim 5, wherein each branch delay block (20) is adapted to generate a delay of N-M chips.

7. A DSSS detector according to any of the preceding claims, comprising m-1 further branches (17, 25), with m ≥ 2, each further branch receiving said spread spectrum signal ($r(nT_c)$) and including a plurality of correlators (1) cascade connected to each other and separated from one another by a branch delay block (20), each correlator of the further branches comprising correlating means (3, 4, 12) for correlating chips, $p_i$, of the spreading sequence, PN, with chips of the spread spectrum signal.

8. A DSSS detector according to claim 7, when depending upon claim 4, wherein the correlators (1) of said further branches (17, 25) comprise each M correlation stages (2), wherein

$$M = (k/m) \cdot N$$

k is a positive number, m is the number of branches including said at least one branch (16) and said further branches (17, 25), N is the spreading factor of the spread spectrum signal, and (k/m)<1.

9. A DSSS detector according to claim 8, wherein the spread spectrum signal ($r(nT_c)$) inputted to the m-th branch (16; 17; 25) is delayed by $(m-1) \cdot (N-M)$ chips.

10. A DSSS detector according to any of claims 7-9 when depending upon claim 3, wherein each further branch (17, 25) comprises a further branch adder element (27) connected to said correlators (1) of an own further branch and adapted to generate an own branch sum signal (s2 (n), s3 (n)) ; and a maximum detector (22, 23) adapted to detect a maximum among said branch sum signals (s1(n), s2(n), s3(n)).

11. A DSSS detector according to claim 10, wherein said maximum detector (22, 23) comprises a comparator (23) adapted to generate a maximum branch signal, the detector further comprising a multiplexer (22) adapted to receive said maximum branch signal and said branch sum signals ($s_1(n)$, s2 (n), s3(n)) and to output a maximum branch sum signal ($d_{out}$) in response to the maximum branch signal.

12. A DSSS modem comprising a DSSS detector (19) according to any of claims 1-11 and a demodulator (47) adapted to receive said spread spectrum signal ($r(nT_c)$) and the maximum branch sum signal ($d_{out}$).

13. A method of detecting a synchronization between a spread spectrum signal ($r(nT_c)$), having a plurality of chips, r (n), and a spreading factor value, N, and a spreading sequence, PN, having a plurality of chips, $p_i$, comprising the steps of:

   a. receiving the spread spectrum signal ($r(nT_c)$) by a plurality of correlators (1) cascade connected to each other, each correlator including a number (M) of correlation stages (2) which is lower than said spreading factor value, N;
   b. generating at least one delayed signal, $r((n-1)T_c)$, from the spread spectrum signal ($r(nT_c)$) delaying the received spread spectrum signal by a delay quantity, N-M, which is lower than the spreading factor value, N;
   c. correlating the spread spectrum signal and the delayed signal with chips of the spreading sequence to generate correlation values (y(n)); and
   d. detecting a matching between the spread spectrum signal and the spreading sequence based on said correlation values.

14. A method according to claim 13, wherein the step of detecting a matching comprises adding said correlation values (y(n)) to generate a first branch sum signal (s1(n)) and detecting a maximum of said branch sum signal.

15. A method according to claim 13 or 14, wherein said at least one delayed signal, $r((n-1)T_c)$, is delayed to generate at least one further delayed signal, $r((n-2)T_c)$, and the method comprises the step of correlating the further delayed signal with further chips ($p_i$) of the spreading sequence to generate further correlation values (y(n)).

16. A method according to any of claims 13-15, wherein the step of correlating comprises receiving a chip r(n), r(n-1), ..., r(n-M-1) of the spread spectrum signal (r(nTc)) or delayed signals, $r((n-1)T_c)$, $r((n-2)T_c)$, in a correlation stage (2), delaying the received chip, feeding the delayed received chip to a subsequent correlation stage (2), performing a chip correlation between the received chip and a coefficient, $c_1, c_2, ..., c_M$, supplying the result of the chip correlation, $r(n) \cdot c_1, r(n-1) \cdot c_2, ..., r(n-M-1) \cdot c_M$, to a sum element (3), calculating a correlation sum (s1(n)) and calculating said correlation value (y(n)).

17. A method according to claim 16 when depending upon claim 15, wherein the chip correlation is performed by M correlation stages (2), the coefficients, $c_1, c_2, ..., c_M$, of said correlation stages (2) being selected from the chips of said spreading sequence, PN, and wherein the steps of correlating the spread spectrum signal ($r(nT_c)$), correlating the at least one delayed signal, $r((n-1)T_c)$, and correlating the at least one further delayed signal, $r((n-2)T_c)$, are performed by a plurality of correlators (1), wherein the coefficients of a first correlator of said plurality of correlators are equal to the first M chips, $p_1, p_2, ... p_M$, of said spreading sequence PN, and the coefficients of subsequent correlators are equal to M subsequent chips of said spreading sequence, separated by N chips with respect to corresponding coefficients of an immediately preceding correlator, wherein N is the spreading factor value.

18. A method according to claim 17, wherein the steps of delaying the spread spectrum signal ($r(nT_c)$) and delaying the at least one delayed signal, $r((n-1)T_c)$, comprises generating a delay of N-M chips.

19. A method according to any of claims 13-18, generating at least one branch delayed signal, $r((n-M)T_c)$, from the spread spectrum signal; correlating the branch delayed signal with chips, $p_i$, of the spreading sequence, PN, to generate second correlation values (y(n)); summing up said second correlation values to obtain a second branch sum values (s2(n)); comparing said first (s1(n)) and second (s2(n)) branch sum values; outputting the greater of the first and the second branch sum values; generating a sequence ($d_{out}$) of maximum branch sum values and detecting a synchronization based on said sequence ($d_{out}$).

**Patentansprüche**

1. DSSS Detektor (19) zum Detektieren einer Synchronisation zwischen einem Bandspreizsignal ($r(nT_c)$), mit einer Mehrzahl von Abschnitte r (n) und einem Spreizfaktorwert N und einer Spreizsequenz PN mit einer Mehrzahl von Abschnitten $p_i$, wobei der DSSS Detektor (19) wenigstens einen Zweig (16) aufweist, der so ausgebildet ist, dass dieser das Bandspreizsignal empfängt, wobei der wenigstens eine Zweig eine Mehrzahl von Korrelatoren (1) aufweist, wobei jeder Korrelator eine Anzahl von M Korrelationsstufen (2) enthält, welche niedriger ist als der Spreizfaktorwert N, wobei die Korrelatoren (1) miteinander in Kaskade verbunden sind und voneinander durch einen Zweig-Verzögerungsblock (20) separiert sind, wobei der Zweig-Verzögerungsblock (20) so ausgebildet ist, dass dieser das empfangene Bandspreizsignal um eine Verzögerungsgröße N-M verzögert, welche niedriger ist als der Spreizfaktorwert N,

wobei jeder Korrelator (1) ein Korrelierungsmittel (3, 4, 12) zum Korrelieren von Abschnitten der Spreizsequenz mit Abschnitten des Bandspreizsignals und zum Erzeugen jeweils eines eigenen Korrelationswertes (y (n)) umfasst, wobei der DSSS Detektor (19) ferner Abgleich-Detektionsmittel (27, 22, 23) zum Empfangen der Korrelationswerte und zum Detektieren, wenn die Abschnitte der Spreizsequenz mit den Abschnitten des Bandspreizsignals ausgerichtet sind, umfasst.

2. DSSS Detektor nach Anspruch 1, in welchem die Abgleich-Detektionsmittel (27, 22, 23) ein Zweig-Addierelement (27) umfassen, das so ausgebildet ist, dass dieses die Korrelationswerte empfängt und ein Zweig-Summensignal (s 1 (n)) erzeugt, und einen Maximum-Detektor (23), der so aus ausgebildet ist, dass dieser ein Maximum des Zweig-Summensignals detektiert.

3. DSSS Detektor nach Anspruch 1 oder 2, in welchem jede Korrelationsstufe (2) aufweist einen Stufeneingang (13), der so konfiguriert ist, dass dieser einen Abschnitt r (n), r (n-1), ... r (n-M-1) des Bandspreizsignals (r(nT$_c$)) empfängt, ein Korrelator-Verzögerungselement (11), das mit dem Stufeneingang verbunden ist, ein Abschnitt-Korrelationselement (12), das mit dem Stufeneingang verbunden ist und so konfiguriert ist, dass dieses einen Abschnitt des Bandspreizsignals mit einem eigenen Koeffizienten $c_1$, $c_2$, ... $c_M$ korreliert, einen ersten Datenausgang (16), der mit dem Abschnitt-Korrelationselement (12) verbunden ist und einen korrelierten Abschnitt r(n)•$C_1$, r(n-1)•$C_2$, ... r(n-M-1)•CM ausgibt, und einen zweiten Datenausgang (15), der mit dem Korrelator-Verzögerungselement (11) und mit einer nachfolgenden Korrelationsstufe (2) verbunden ist, wobei der Korrelator (1) ferner umfasst ein Summenelement (3), das so ausgebildet ist, dass dieses die korrelierten Abschnitte empfängt und eine Korrelationssumme ($r_s$ (n)) berechnet, und ein Modulelement (4), das so ausgebildet ist, dass dieses die Korrelationssumme empfängt und den Korrelationswert (y (n)) berechnet.

4. DSSS Detektor nach Anspruch 3, in welchem die Korrelationselemente Multiplier (12) sind.

5. DSSS Detektor nach Anspruch 3 oder 4, in welchem die Koeffizienten ($c_1$, $c_2$, ..., $c_M$) der Korrelationsstufen (2) ausgewählt sind aus den Abschnitten ($p_i$) der Spreizsequenz PN und in welchem die Koeffizienten $c_1$, $c_2$,..., cM eines ersten Korrelators (1) der Mehrzahl von Korrelatoren (1) gleich den ersten M Abschnitten $p_1$, $p_2$, ... $p_M$ der Spreizsequenz PN sind und die Koeffizienten der nachfolgenden Korrelatoren (1) gleich den M nachfolgenden Abschnitten der Spreizsequenz sind, separiert durch N Abschnitte in Bezug auf korrespondierende Koeffizienten eines unmittelbar vorhergehenden Korrelators (1), wobei M die Zahl der Korrelationsstufen (2) in jedem Korrelator (1) ist und N der Spreizfaktorwert ist.

6. DSSS Detektor nach Anspruch 5, in welchem jeder Zweig-Verzögerungsblock (20) so ausgebildet ist, dass dieser eine Verzögerung von N-M Abschnitten erzeugt.

7. DSSS Detektor nach einem der vorhergehenden Ansprüche, mit M-1 weiteren Zweigen (17, 25), wobei m ≥ 2 ist, wobei jeder weitere Zweig das Bandspreizsignal (r (nT$_c$)) empfängt und eine Mehrzahl von Korrelatoren (1) enthält, die miteinander in Kaskade verbunden sind und voneinander durch einen Zweig-Verzögerungsblock (20) separiert sind, wobei jeder Korrelator der weiteren Zweige Korrelationsmittel (3, 4, 12) zum Korrelieren von Abschnitten $p_i$ der Spreizsequenz PN mit Abschnitten des Bandspreizsignals umfasst.

8. DSSS Detektor nach Anspruch 7, wenn dieser abhängig ist von Anspruch 4, in welchem die Korrelatoren (1) der weiteren Zweige (17, 25) jeweils M Korrelationsstufen (2) umfassen, in welchem

$$M = (k/m) \bullet N$$

ist, wobei k eine positive Zahl ist, m die Anzahl von Zweigen ist, einschließlich dem wenigstens einen Zweig (16) und den weiteren Zweigen (17, 25), N der Spreizfaktor des Bandspreizsignals ist und (k/m) <1 ist.

9. DSSS Detektor nach Anspruch 8, in welchem das Bandspreizsignal (r (nT$_c$)), das am m-ten Zweig (16; 17, 25) eingegeben wurde, um (m-1)•(N-M) Abschnitte verzögert ist.

**10.** DSSS Detektor nach einem der Ansprüche 7 bis 9, wenn dieser abhängig ist von Anspruch 3, in welchem jeder weitere Zweig (17, 25) umfasst ein weiteres Zweig-Addierelement (27), das mit den Korrelatoren (1) eines eigenen weiteren Zweigs verbunden ist und so ausgebildet ist, dass dieses ein eigenes Zweig-Summensignal (s2 (n), s3 (n)) erzeugt, und einen Maximum-Detektor ((22, 23), der so ausgebildet ist, dass dieser ein Maximum aus den Zweig-Summensignalen (s1 (n), s2 (n), s3 (n)) detektiert.

**11.** DSSS Detektor nach Anspruch 10, in welchem der Maximum-Detektor (22, 23) einen Vergleicher (23) umfasst, der so ausgebildet ist, dass dieser ein Maximum-Zweigsignal erzeugt, wobei der Detektor ferner einen Multiplexer (22) umfasst, der so ausgebildet ist, dass dieser das Maximum-Zweigsignal und die Zweig-Summensignale (s 1 (n), s2 (n), s3 (n)) empfängt und ein Maximum-Zweig-Summensignal ($d_{out}$) in Antwort auf das Maximum-Zweigsignal ausgibt.

**12.** DSSS Modem umfassend einen DSSS Detektor (19) nach einem der Ansprüche 1 bis 11 und einen Demodulator (47), der so ausgebildet ist, dass dieser das Bandspreizsignal ($r(nT_c)$) und das Maximum-Zweig-Summensignal ($d_{out}$) empfängt.

**13.** Verfahren zum Detektieren einer Synchronisation zwischen einem Bandspreizsignal ($r(nT_c)$), mit einer Mehrzahl von Abschnitten r (n) und einem Spreizfaktorwert N und einer Spreizsequenz PN mit einer Mehrzahl von Abschnitten $p_i$, umfassend die Schritte:

   a. Empfangen des Bandspreizsignals ($r(nT_c)$) durch eine Mehrzahl von Korrelatoren (1), die miteinander in Kaskade verbunden sind, wobei jeder Korrelator eine Anzahl (M) von Korrelationsstufen (2) umfasst, welche niedriger ist als der Spreizfaktorwert N ist;
   b. Erzeugen wenigstens eines verzögerten Signals $r((n-1)T_c)$, aus dem Bandspreizsignal ($r (nT_c)$), welches das empfangene Bandspreizsignal um eine Verzögerungsgröße N-M verzögert, welche geringer ist als der Spreizfaktorwert N;
   c. Korrelieren des Bandspreizsignals und des verzögerten Signals mit Abschnitten der Spreizsequenz, um Korrelationswerte (y (n)) zu erzeugen; und
   d. Detektieren eines Abgleichs zwischen dem Bandspreizsignal und der Spreizsequenz basierend auf den Korrelationswerten.

**14.** Verfahren nach Anspruch 13, in welchem der Schritt des Detektierens eines Abgleichs ein Addieren der Korrelationswerte (y (n)), um ein erstes Zweig-Summensignal (s1 (n)) zu erzeugen, und ein Detektieren eines Maximums des Zweig-Summensignals umfasst.

**15.** Verfahren nach Anspruch 13 oder 14, in welchem das wenigstens eine verzögerte Signal r ((n-1) $T_c$) verzögert ist, um wenigstens ein weiteres verzögertes Signal r ((n-2) $T_c$) zu erzeugen, und das Verfahren den Schritt umfasst, das weitere verzögerte Signal mit weiteren Abschnitten ($p_i$) der Spreizsequenz zu korrelieren, um weitere Korrelationswerte (y (n)) zu erzeugen.

**16.** Verfahren nach einem der Ansprüche 13 bis 15, in welchem der Schritt des Korrelierens ein Empfangen eines Abschnitts r (n), r (n-1), ... r (n-M-1) des Bandspreizsignals ($r(nT_c)$) oder verzögerter Signale r ((n-1) $T_c$), r ((n-2) $T_c$) in einer Korrelationsstufe (2), ein Verzögern des empfangenen Abschnitts, ein Zuführen des verzögerten empfangenen Abschnitts an eine nachfolgende Korrelationsstufe (2), ein Durchführen einer Abschnittskorrelation zwischen dem empfangenen Abschnitt und einem Koeffizienten $c_1$, $c_2$, ..., $c_M$, ein Zuführen des Ergebnisses der Abschnitts-korrelation $r(n) \cdot C_1$, $r(n-1) \cdot C_2$, ... $r(n-M-1) \cdot C_M$ an ein Summenelement (3) ein Berechnen einer Korrelationssumme (s1(n)) und ein Berechnen des Korrelationswertes (y (n)).

**17.** Verfahren nach Anspruch 16, wenn dieser abhängig ist von Anspruch 15, in welchem die Abschnittskorrelation durchgeführt wird durch M Korrelationsstufen (2), wobei die Koeffizienten ($c_1$, $c_2$, ..., $c_M$) der Korrelationsstufen (2) ausgewählt werden aus den Abschnitten der Spreizsequenz PN und wobei die Schritte des Korrelierens des Bandspreizsignals ($r (nT_c)$), des Korrelierens des wenigstens einen verzögerten Signals r ((n-1) $T_c$) und des Korrelierens des wenigstens einen weiteren verzögerten Signals r ((n-2) $T_c$) durch eine Mehrzahl von Korrelatoren (1) durchgeführt werden, wobei die Koeffizienten eines ersten Korrelators der Mehrzahl von Korrelatoren gleich den ersten M Ab-schnitten $p_1$, $p_2$, ... $p_M$ der Spreizsequenz PN sind und die Koeffizienten der nachfolgenden Korrelatoren gleich den M nachfolgenden Abschnitten der Spreizsequenz sind, separiert durch N Abschnitte in Bezug auf die korrespondierenden Koeffizienten eines unmittelbar vorhergehenden Korrelators, wobei N der Spreizfaktorwert ist.

**18.** Verfahren nach Anspruch 17, in welchem die Schritte des Verzögerns des Bandspreizsignals (r (nT$_c$)) und des Verzögerns des wenigstens einen verzögerten Signals r ((n-1) T$_c$) ein Erzeugen einer Verzögerung von N-M Abschnitten umfasst.

**19.** Verfahren nach einem der Ansprüche 13 bis 18, das wenigstens ein verzögertes Zweigsignal r ((n-M) T$_c$) aus dem Bandspreizsignal erzeugt, das das verzögerte Zweigsignal mit Abschnitten p$_i$ der Spreizsequenz PN korreliert, um zweite Korrelationswerte (y (n)) zu erzeugen, das die zweiten Korrelationswerte aufsummiert, um zweite Zweig-Summenwerte (s2 (n)) zu erhalten, den ersten (s 1 (n)) und zweiten (s2 (n)) Zweig-Summenwert vergleicht, den größeren des ersten und zweiten Zweig-Summenwertes ausgibt, eine Sequenz (d$_{out}$) der Maximum-Zweig-Summenwerte erzeugt und eine Synchronisation basierend auf dieser Sequenz (d$_{out}$) detektiert.

**Revendications**

**1.** Détecteur DSSS (19) pour détecter une synchronisation entre un signal à spectre étalé (r(nT$_c$)), ayant une pluralité de bribes, r(n), et une valeur de facteur d'étalement, N, et une séquence d'étalement, PN, ayant une pluralité de bribes, p$_i$, le détecteur DSSS (19) comprenant au moins une branche (16) adaptée pour recevoir le signal à spectre étalé, la au moins une branche comprenant une pluralité de corrélateurs (1), chaque corrélateur comprenant un nombre, M, d'étages de corrélation (2) qui est inférieur à ladite valeur de facteur d'étalement, N, les corrélateurs (1) étant connectés en cascade les uns aux autres et séparés les uns des autres par un bloc de retard de branche (20), ledit bloc de retard de branche (20) étant adapté pour retarder le signal à spectre étalé reçu d'une quantité de retard, N-M, qui est inférieure à la valeur de facteur d'étalement, N,
chaque corrélateur (1) comprenant des moyens de corrélation (3, 4, 12) pour corréler des bribes de la séquence d'étalement avec des bribes du signal à spectre étalé et générer pour chaque une valeur de corrélation propre y(n), le détecteur DSSS (19) comprenant en outre des moyens de détection de concordance (27, 22, 23) pour recevoir lesdites valeurs de corrélation et détecter quand lesdites bribes de la séquence d'étalement sont alignées avec lesdites bribes du signal à spectre étalé.

**2.** Détecteur DSSS selon la revendication 1, dans lequel lesdits moyens de détection de concordance (27, 22, 23) comprennent un élément d'additionneur de branche (27) adapté pour recevoir lesdites valeurs de corrélation et générer un signal de somme de branche (s1(n)) ; et un détecteur de maximum (23) adapté pour détecter un maximum dudit signal de somme de branche.

**3.** Détecteur DSSS selon la revendication 1 ou 2, dans lequel chaque étage de corrélation (2) comporte une entrée d'étage (13) configurée pour recevoir une bribe, r(n), r(n-1), ..., r(n-M-1), du signal à spectre étalé (r(nT$_c$)), un élément de retard de corrélateur (11) connecté à ladite entrée d'étage, un élément de corrélation de bribe (12) connecté à ladite entrée d'étage et configuré pour corréler une bribe du signal à spectre étalé avec un coefficient propre, c$_1$, c$_2$, ..., c$_M$, une première sortie de données (16) connectée audit élément de corrélation de bribe (12) et sortant une bribe corrélée, r(n)·c$_1$, r(n-1)·c$_2$, ..., r(n-M-1)·c$_M$, et une seconde sortie de données (15) connectée audit élément de retard de corrélateur (11) et à un étage de corrélation subséquent (2) ; le corrélateur (1) comprenant en outre un élément de somme (3) adapté pour recevoir lesdites bribes corrélées et calculer une somme de corrélation (r$_s$ (n)) et un élément de module (4) adapté pour recevoir ladite somme de corrélation et calculer la valeur de corrélation (y(n)).

**4.** Détecteur DSSS selon la revendication 3, dans lequel les éléments de corrélation sont des multiplicateurs (12).

**5.** Détecteur DSSS selon la revendication 3 ou 4, dans lequel lesdits coefficients (c$_1$, c$_2$, ..., c$_M$) desdits étages de corrélation (2) sont sélectionnés parmi les bribes (p$_i$) de ladite séquence d'étalement, PN, et dans lequel les coefficients, c$_1$, c$_2$, ..., c$_M$, d'un premier corrélateur (1) de ladite pluralité de corrélateurs (1) sont égaux aux M premières bribes, p$_1$, p$_2$, ..., p$_M$, de ladite séquence d'étalement, PN, et les coefficients de corrélateurs subséquents (1) sont égaux aux M bribes subséquentes de ladite séquence d'étalement, séparées de N bribes par rapport aux coefficients correspondants d'un corrélateur immédiatement précédent (1), M étant le nombre d'étages de corrélation (2) dans chaque corrélateur (1), et N étant la valeur de facteur d'étalement.

**6.** Détecteur DSSS selon la revendication 5, dans lequel chaque bloc de retard de branche (20) est adapté pour générer un retard de N-M bribes.

**7.** Détecteur DSSS selon l'une quelconque des revendications précédentes, comprenant m-1 branches supplémentaires (17, 25), avec m ≥ 2, chaque branche supplémentaire recevant ledit signal à spectre étalé (r(nT$_c$)) et comprenant une pluralité de corrélateurs (1) connectés en cascade les uns aux autres et séparés les uns des autres par un bloc de retard de branche (20), chaque corrélateur des branches supplémentaires comprenant des moyens de corrélation (3, 4, 12) pour corréler des bribes, p$_i$, de la séquence d'étalement, PN, avec des bribes du signal à spectre étalé.

8. Détecteur DSSS selon la revendication 7, lorsqu'elle dépend de la revendication 4, dans lequel les corrélateurs (1) desdites branches supplémentaires (17, 25) comprennent chacun M étages de corrélation (2), dans lequel

$$M = (k/m) \cdot N$$

k est un nombre positif, m est le nombre de branches comprenant ladite au moins une branche (16) et lesdites branches supplémentaires (17, 25), N est le facteur d'étalement du signal à spectre étalé, et (k/m) <1 .

9. Détecteur DSSS selon la revendication 8, dans lequel le signal à spectre étalé (r(nT$_c$)) entré dans la m-ième branche (16 ; 17 ; 25) est retardé par (m-1)·(N-M) bribes.

10. Détecteur DSSS selon l'une quelconque des revendications 7 à 9 lorsqu'elles dépendent de la revendication 3, dans lequel chaque branche supplémentaire (17, 25) comprend un élément d'additionneur de branche supplémentaire (27) connecté auxdits corrélateurs (1) d'une branche supplémentaire propre et adapté pour générer un signal de somme de branche propre (s2(n), s3(n)) ; et un détecteur de maximum (22, 23) adapté pour détecter un maximum parmi lesdits signaux de somme de branche (s1(n), s2(n), s3(n)).

11. Détecteur DSSS selon la revendication 10, dans lequel ledit détecteur de maximum (22, 23) comprend un comparateur (23) adapté pour générer un signal de branche maximum, le détecteur comprenant en outre un multiplexeur (22) adapté pour recevoir ledit signal de branche maximum et lesdits signaux de somme de branche (s1(n), s2(n), s3(n)) et pour sortir un signal de somme de branche maximum (d$_{out}$) en réponse au signal de branche maximum.

12. Modem DSSS, comprenant un détecteur DSSS (19) selon l'une quelconque des revendications 1 à 11 et un démodulateur (47) adapté pour recevoir ledit signal à spectre étalé (r(nT$_c$)) et le signal de somme de branche maximum (d$_{out}$).

13. Procédé de détection d'une synchronisation entre un signal à spectre étalé (r(nT$_c$)), ayant une pluralité de bribes, r(n), et une valeur de facteur d'étalement, N, et une séquence d'étalement, PN, ayant une pluralité de bribes, p$_i$, comprenant les étapes de :

    a. réception du signal à spectre étalé (r(nT$_c$)) par une pluralité de corrélateurs (1) connectés en cascade les uns aux autres, chaque corrélateur comprenant un nombre (M) d'étages de corrélation (2) qui est inférieur à ladite valeur de facteur d'étalement, N ;
    b. génération d'au moins un signal retardé, r((n-1)T$_c$), à partir du signal à spectre étalé (r(nT$_c$)) retardant le signal à spectre étalé reçu d'une quantité de retard, N-M, qui est inférieure à la valeur de facteur d'étalement, N ;
    c. corrélation du signal à spectre étalé et du signal retardé avec des bribes de la séquence d'étalement afin de générer des valeurs de corrélation (y(n)); et
    d. détection d'une concordance entre le signal à spectre étalé et la séquence d'étalement sur la base desdites valeurs de corrélation.

14. Procédé selon la revendication 13, dans lequel l'étape de détection d'une concordance comprend l'addition desdites valeurs de corrélation (y(n)) afin de générer un premier signal de somme de branche (s1(n)) et la détection d'un maximum dudit signal de somme de branche.

15. Procédé selon la revendication 13 ou 14, dans lequel ledit au moins un signal retardé, r((n-1)T$_c$), est retardé afin de générer au moins un signal retardé supplémentaire, r((n-2)T$_c$), et le procédé comprend l'étape de corrélation du signal retardé supplémentaire avec des bribes supplémentaires (p$_i$) de la séquence d'étalement afin de générer des valeurs de corrélation supplémentaires (y(n)).

16. Procédé selon l'une quelconque des revendications 13 à 15, dans lequel l'étape de corrélation comprend la réception d'une bribe, r(n), r(n-1), ..., r (n-M-1) du signal à spectre étalé (r(nT$_c$)) ou de signaux retardés, r((n-1)T$_c$), r((n-2)T$_c$),

dans un étage de corrélation (2), le retardement de la bribe reçue, l'application de la bribe reçue retardée à un étage de corrélation subséquent (2), l'exécution d'une corrélation de bribe entre la bribe reçue et un coefficient, $c_1$, $c_2$, ..., $c_M$, la fourniture du résultat de la corrélation de bribe, $r(n) \cdot c_1$, $r(n-1) \cdot c_2$, ..., $r(n-M-1) \cdot c_M$, à un élément de somme (3), le calcul d'une somme de corrélation ($s1(n)$) et le calcul de ladite valeur de corrélation ($y(n)$).

17. Procédé selon la revendication 16 lorsqu'elle dépend de la revendication 15, dans lequel la corrélation de bribe est effectuée par M étages de corrélation (2), les coefficients, $c_1$, $c_2$, ..., $c_M$, desdits étages de corrélation (2) étant sélectionnés parmi les bribes de ladite séquence d'étalement, PN, et dans lequel les étapes de corrélation du signal à spectre étalé ($r(nT_c)$), de corrélation du au moins un signal retardé, $r((n-1)T_c)$, et de corrélation du au moins un signal retardé supplémentaire, $r((n-2)T_c)$, sont effectuées par une pluralité de corrélateurs (1), où les coefficients d'un premier corrélateur de ladite pluralité de corrélateurs sont égaux aux M premières bribes, $p_1$, $p_2$, ..., $p_M$, de ladite séquence d'étalement, PN, et les coefficients de corrélateurs subséquents sont égaux à M bribes subséquentes de ladite séquence d'étalement, séparées de N bribes par rapport aux coefficients correspondants d'un corrélateur immédiatement précédent, où N est la valeur de facteur d'étalement.

18. Procédé selon la revendication 17, dans lequel les étapes de retardement du signal à spectre étalé ($r(nT_c)$) et de retardement du au moins un signal retardé, $r((n-1)T_c)$, comprennent la génération d'un retard de N-M bribes.

19. Procédé selon l'une quelconque des revendications 13 à 18, générant au moins un signal retardé de branche, $r((n-M)T_c)$, à partir du signal à spectre étalé ; corrélant le signal retardé de branche avec des bribes, $p_i$, de la séquence d'étalement, PN, afin de générer des secondes valeurs de corrélation ($y(n)$) ; totalisant lesdits secondes valeurs de corrélation afin d'obtenir une seconde valeur de somme de branche ($s2(n)$) ; comparant lesdites première ($s1(n)$) et seconde ($s2(n)$) valeurs de somme de branche ; sortant la plus grande des première et seconde valeurs de somme de branche ; générant une séquence ($d_{out}$) de valeurs de somme de branche maximums et détectant une synchronisation sur la base de ladite séquence ($d_{out}$).

FIG. 1a

FIG. 1b

FIG. 1c

FIG. 2

FIG. 3

FIG. 4

FIG. 5

FIG. 6a

FIG. 6b

FIG. 6c

FIG. 7

FIG. 8

EP 2 272 174 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9941846 A